# EUROPEAN PATENT SPECIFICATION

(11) **EP 3 699 022 B1**
(45) Date of publication and mention of the grant of the patent: **18.05.2022**
(21) Application number: 19305198.4
(22) Date of filing: 19.02.2019
(51) Int. Cl.: B60M 1/30, B60M 1/234

(54) **DAMPENING SUPPORT FOR A RIGID CATENARY ELEMENT OF A RIGID CATENARY SYSTEM OF A RAILWAY LINE**
DÄMPFUNGSELEMENT FÜR EINE DECKENSTROMSCHIENE EINES STARREN OBERLEITUNGSSYSTEMS EINER EISENBAHNSTRECKE
SUPPORT D'AMORTISSEMENT POUR ÉLÉMENT DE CATÉNAIRE RIGIDE D'UN SYSTÈME DE CATÉNAIRE RIGIDE D'UNE LIGNE DE CHEMIN DE FER

(43) Date of publication of application: 26.08.2020
(73) Proprietor: ALSTOM Transport Technologies, 93400 Saint-Ouen (FR)
(72) Inventor: BINDA, Claudio, 23811 BALLABIO (IT); MARCHI, Alberto, 20900 MONZA (IT); FLENA, Daniele, 23843 DOLZAGO (IT)
(74) Representative: Lavoix

(56) References cited:
- EP-A2- 2 607 148
- CN-A- 108 058 620
- DE-A1-102009 033 447
- DE-U1-202004 009 416

## Description

The present invention relates to a dampening support for a rigid catenary element of a rigid catenary system of a railway line, for the supply of current to high speed railway vehicles, in particular in underground transportation systems.

It is known to have electricity supply lines comprising a conducting wire or several supported parallel conducting wires which constitute a current supply line for a mobile current pick-up device, such as the bow of a pantograph of an electric motor.

Also known are flexible supply lines in which the conducting wire or wires are suspended from a known structure called "*catenary*". Such supply lines have as their principal advantage their flexibility, and consequently they permit the supply of electricity to transport railway vehicles circulating at high speed. They have however the disadvantage of the height that they must occupy, which can become excessive when they have to be installed under arches of tunnels.

Also known are rigid supply lines, the so-called rigid catenary systems, in which the conducting wire or wires are housed in a rigid hollow conductor body constituted by a series of rails placed end-to-end. Such supply lines have as their principal advantage that they take up little space and are especially convenient for use under arches. The rigid catenary systems are therefore mainly used for electrification in tunnels, because the reduced tunnel gauges do not allow the placement of conventional catenary cables. Gauge is understood as the distance between the top of the arch of the tunnel and the axis of the railway track.

The principal disadvantage of the rigid catenary systems is their rigidity, which imposes on the movable device for picking up current the absorption of all deformations, and thus necessitates the use of a current pick-up device having an elevated natural frequency in the case where the circulating railway vehicles circulate at high speed.

In order to solve this problem, prior art solutions use sometimes elastic grooves that guarantee elasticity in the system, or a power spring in a groove that produces elasticity in the system or a damper in rubber or other similar material.

The document DE 20 2004 009 416 U1 discloses a support for a rigid catenary with a dampening spring.

However, none of these solutions allows achieving good performances and, often, high speeds cannot be guaranteed because, above 120-140km/h, the stiffness of the supports reduces the quality of contact between the catenary elements and the pantograph.

There is therefore a need to provide a dampening support for a rigid catenary element of a rigid catenary system of a railway line which remedies the aforesaid inconveniences and which offers at the same time the advantage that little space is taken up and of high flexibility, to permit its use under arches for high speed railway systems.

These and other objects are fully achieved by virtue of a dampening support for a rigid catenary element of a rigid catenary system of a railway line having the characteristics defined in independent claim 1.

Preferred embodiments of the invention are specified in the dependent claims 2 to 9, whose subject-matter is to be understood as forming an integral part of the present description.

Further characteristics and advantages of the present invention will become apparent from the following description, provided merely by way of a non-limiting example, with reference to the enclosed drawings, in which:
- Figure 1 shows a perspective view of a dampening support for a rigid catenary element of a rigid catenary system according to the present invention; and
- Figure 2 shows a front view of the dampening support of figure 1.

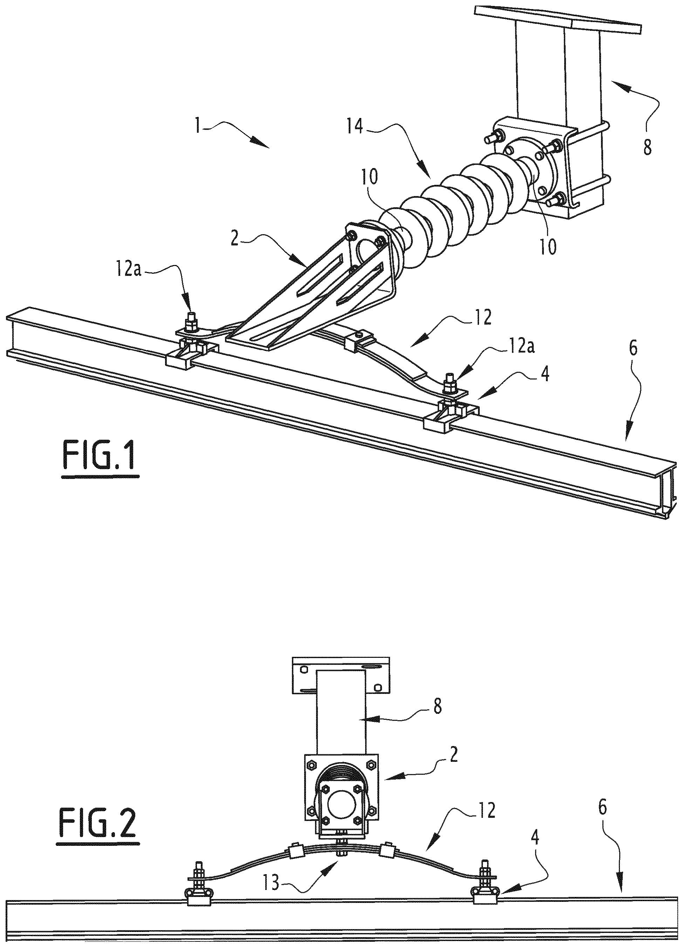

Figure 1 shows a perspective view of a dampening support 1 for a rigid catenary element of a rigid catenary system of a railway line according to the present invention.

The dampening support 1 comprises a cantilever 2, preferably made of steel, arranged to sustain at least one hanger clamp 4 for supporting a hollow body 6. The hollow body 6 represents a rigid catenary element 6, notably a rigid catenary profile including a contact wire in its lower part.

The hanger clamp 4 has a top part by means of which it is adapted to be suspended from the cantilever 2 and a bottom part by means of which it is adapted to receive at least a portion of the hollow body 6.

The dampening support 1 comprises preferably two hanger clamps 4 arranged on both sides of the cantilever 2.

The cantilever 2 is fixed to a support structure 8 for supporting the rigid catenary system through a tubular element 10.

The support structure 8 is for example fixed under arches of tunnels.

The hollow body 6 is slidable with respect to each hanger clamp 4, which in turn supports the hollow body 6 through an elastic element 12.

The elastic element 12 is preferably a leaf spring.

In Figures 1 and 2, the leaf spring 12 is fixed at both ends to both hanger clamps 4 through bolted connections 12a.

The leaf spring 12 is fixed at its center to the cantilever 2, preferably through a bolted connection 13, as visible on figure 2.

Advantageously, the leaf spring 12 is longer than 500 mm, this distance being calculated between the bolted connections 12a. Preferably, the distance is between 800 and 900 mm.

Advantageously, the leaf spring 12 comprises several leaves stacked on top of each other in several layers, with progressively shorter leaves. The leaf spring 12 comprises at least two leaves, preferably three leaves, as visible on figures 1 and 2.

The dampening support 1 further comprises an insulator 14 wound around the tubular element 10, to avoid lightning on the support structure 8 and to guarantee dielectric insulation between parts having an electrical voltage applied to them and the support structure 8.

Figure 2 shows a front view of the dampening support of figure 1 wherein similar elements have been indicated with the same reference number.

During the travel, in high speed mode, the railway vehicle generates waves that propagate in the catenary system, and which could be amplified due to reflection and wave superimposition phenomena, this resulting in very high forces unleashing on the support-tunnel interface anchoring.

Moreover, catenaries require their generalized stiffness to be as even as possible along their spans (which are the portions of catenary from a support to the next one). By using rigid supports, a localized increase of stiffness is created into the system and this leads to low quality dynamic interaction between the catenary and the moving pantograph, which is prone on oscillating vertically and detaching from the contact wire.

The present invention solves the high speed problems because when these waves meets the dampening support(s) 1, their energy is dissipated by the elastic deformation of the elastic element 12 and the friction actions between the hollow body 6 and the hanger clamps 4. As a result, thanks to the damping characteristics of the elastic element 12, the dampening support 1 can dampen waves generated by the pantograph moving along the hollow body 6.

Moreover, the dampening support 1 of the present invention allows reducing the local stiffness of the supporting points and it adds a dampening factor to reduce and compensate the vibrations generated by the pantograph passage under the hollow body 6.

In a single device, therefore, elasticity and dampening characteristics are achieved together.

The dampening support 1 of the present invention allows achieving good performances, even with railway vehicles circulating at high speeds, typically above 120-140km/h.

Besides, the installation of the dampening support 1 of the present invention under arches of tunnels is easy and fast.

Clearly, the principle of the invention remaining the same, the embodiments and the details of production can be varied considerably from what has been described and illustrated purely by way of non-limiting example, without departing from the scope of protection of the present invention as defined by the attached claims.

## Claims

1. A dampening support (1) for a rigid catenary element (6) of a rigid catenary system of a railway line, the dampening support (1) comprising a cantilever (2) arranged to sustain two hanger clamps (4) arranged on both sides of the cantilever (2) for supporting the catenary element (6) on the cantilever (2), wherein the cantilever (2) is fixed to a support structure (8) for supporting the rigid catenary system, the two hanger clamps (4) supporting the catenary element (6) through an elastic element (12).

2. The dampening support (1) according to claim 1, wherein the cantilever (2) is fixed to the support structure (8) through a tubular element (10), the dampening support (1) further comprising an insulator (14) wound around the tubular element (10) to avoid lightning on the support structure (8).

3. The dampening support (1) according to claim 1 or 2, wherein the cantilever (2) is made of steel.

4. The dampening support (1) according to any of the preceding claims, wherein the catenary element (6) is an hollow body.

5. The dampening support (1) according to any of the preceding claims, wherein the catenary element (6) includes a contact wire in its lower part

6. The dampening support (1) according to any of the preceding claims, wherein the catenary element (6) is slidable with respect to the hanger clamp (4).

7. The dampening support (1) according to any of the preceding claims, wherein the elastic element (12) is a leaf spring.

8. The dampening support (1) according to claim 7, wherein the leaf spring is longer than 500 mm.

9. The dampening support (1) according to claim 7 or 8, wherein the leaf spring comprises several leaves stacked on top of each other, advantageously three leaves.

## Patentansprüche

1. Dämpfungshalterung (1) für ein starres Fahrleitungselement (6) eines starren Fahrleitungssystems einer Eisenbahnlinie, die Dämpfungshalterung (1) umfassend einen Ausleger (2), der angeordnet ist, um zwei Hängeklemmen (4) zu tragen, die auf beiden Seiten des Auslegers (2) angeordnet sind, um das Fahrleitungselement (6) an dem Ausleger (2) zu halten, wobei der Ausleger (2) an einer Halterungsstruktur (8) zum Halten des starren Oberleitungssystems befestigt ist, wobei die zwei Hängeklemmen (4) das Fahrleitungselement (6) durch ein elastisches Element (12) halten.

2. Dämpfungshalterung (1) nach Anspruch 1, wobei der Ausleger (2) durch ein rohrförmiges Element (10) an der Halterungsstruktur (8) befestigt ist, die Dämpfungshalterung (1) ferner umfassend einen Isolator (14), der um das rohrförmige Element (10) gewickelt ist, um Blitze auf der Halterungsstruktur (8) zu vermeiden.

3. Dämpfungshalterung (1) nach Anspruch 1 oder 2, wobei der Ausleger (2) aus Stahl gefertigt ist.

4. Dämpfungshalterung (1) nach einem der vorherigen Ansprüche, wobei das Fahrleitungselement (6) ein Hohlkörper ist.

5. Dämpfungshalterung (1) nach einem der vorherigen Ansprüche, wobei das Fahrleitungselement (6) in seinem unteren Teil einen Kontaktdraht aufweist

6. Dämpfungshalterung (1) nach einem der vorherigen Ansprüche, **dadurch gekennzeichnet, dass** das Fahrleitungselement (6) gegenüber der Hängeklemme (4) verschiebbar ist.

7. Dämpfungshalterung (1) nach einem der vorherigen Ansprüche, wobei das elastische Element (12) eine Blattfeder ist.

8. Dämpfungshalterung (1) nach Anspruch 7, wobei die Blattfeder länger als 500 mm ist.

9. Dämpfungshalterung (1) nach Anspruch 7 oder 8, wobei die Blattfeder mehrere, vorteilhafterweise drei, übereinander gestapelte Blätter umfasst.

## Revendications

1. Support d'amortissement (1) pour un élément de caténaire rigide (6) d'un système de caténaire rigide d'une ligne de chemin de fer, le support d'amortissement (1) comprenant un élément en porte-à-faux (2) agencé pour soutenir deux pinces de suspension (4) agencées des deux côtés de l'élément en porte-à-faux (2) pour supporter l'élément de caténaire (6) sur l'élément en porte-à-faux (2), dans lequel l'élément en porte-à-faux (2) est fixé à une structure de support (8) pour supporter le système de caténaire rigide, les deux pinces de suspension (4) supportant l'élément de caténaire (6) par l'intermédiaire d'un élément élastique (12).

2. Support d'amortissement (1) selon la revendication 1, dans lequel l'élément en porte-à-faux (2) est fixé à la structure de support (8) par l'intermédiaire d'un élément tubulaire (10), le support d'amortissement (1) comprenant en outre un isolant (14) enroulé autour de l'élément tubulaire (10) pour protéger de la foudre la structure de support (8).

3. Support d'amortissement (1) selon la revendication 1 ou 2, dans lequel l'élément en porte-à-faux (2) est constitué d'acier.

4. Support d'amortissement (1) selon l'une quelconque des revendications précédentes, dans lequel l'élément de caténaire (6) est un corps creux.

5. Support d'amortissement (1) selon l'une quelconque des revendications précédentes, dans lequel l'élément de caténaire (6) comprend un fil de contact dans sa partie inférieure.

6. Support d'amortissement (1) selon l'une quelconque des revendications précédentes, dans lequel l'élément de caténaire (6) peut coulisser par rapport à la pince de suspension (4).

7. Support d'amortissement (1) selon l'une quelconque des revendications précédentes, dans lequel l'élément élastique (12) est un ressort à lames.

8. Support d'amortissement (1) selon la revendication 7, dans lequel le ressort à lames a une longueur supérieure à 500 mm.

9. Support d'amortissement (1) selon la revendication 7 ou 8, dans lequel le ressort à lames comprend plusieurs lames empilées les unes sur les autres, de préférence trois lames.
